(19) Europäisches Patentamt
European Patent Office
Office européen des brevets

(11) **EP 2 527 074 A1**

(12) **EUROPEAN PATENT APPLICATION**

(43) Date of publication:
**28.11.2012 Bulletin 2012/48**

(51) Int Cl.:
**B23K 20/12** *(2006.01)*

(21) Application number: **12151502.7**

(22) Date of filing: **18.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.05.2011 JP 2011119214**

(71) Applicant: **Mitsubishi Heavy Industries, Ltd.**
**Tokyo 108-8215 (JP)**

(72) Inventors:
• **Kato, Yoshinori**
**Tokyo (JP)**
• **Sato, Hiroaki**
**Tokyo (JP)**

(74) Representative: **Intès, Didier Gérard André et al**
**Cabinet Beau de Loménie**
**158, rue de l'Université**
**75340 Paris Cedex 07 (FR)**

(54) **Friction stir welding tool with groove on a shoulder surface; Friction stir welding apparatus with such tool**

(57)    The present invention relates to a bobbin tool including: a first shoulder surface (32) which comes into contact with a front surface of a subject work piece; a second shoulder surface (35) which is disposed so as to face the first shoulder surface (32) and comes into contact with a rear surface of the work piece; and a shaft portion (37) which connects the first shoulder surface (32) and the second shoulder surface (35) to each other with a gap therebetween fixed, the first shoulder surface (32) and the second shoulder surface (35) are provided with a first vortex groove (33) and a second vortex groove (36) which extend toward the front side of a tool rotation direction (R) so as to be opened to the outer peripheral edge as it moves to the outer peripheral side.

FIG. 2

**Description**

BACKGROUND OF THE INVENTION

Field of the Invention

The present invention relates to a friction stir welding tool and a friction stir welding apparatus which perform friction stir welding on a work piece.

Description of Related Art

As one of methods of welding a work piece formed of two members, friction stir welding is known. The friction stir welding indicates that a tool is rotated while a surface called a shoulder surface of the tool is pressed against a welding position of the work piece with a predetermined pressure so as to generate friction heat in the surface of the work piece and the work piece is softened and welded by the friction heat.
In such friction stir welding, there is a known type which uses a so-callcd bobbin tool (for example, see, Patent Documents I to 4).

The bobbin tool includes a front surface side shoulder which has one shoulder surface and a rear surface side shoulder which has the other shoulder surface facing the one shoulder surface. The rear surface side shoulder is attached to a shaft portion which penetrates the front surface side shoulder. When friction stir welding is performed, the shaft portion is made to penetrate the work piece, the front surface side shoulder is disposed at the front surface side of the work piece, and the rear surface side shoulder is disposed at the rear surface side thereof. Then, the work piece is softened by generating friction heat while the front and rear surfaces of the work piece are interposed and pressurized between the shoulder surfaces of the front surface side shoulder and the rear surface side shoulder. At this time, when the work piece which is softened by the shaft portion inserted into the softened portion is stirred, friction stir welding is performed.

In such a bobbin tool, when a sheet pressure variation occurs due to the distortion or the manufacture error of the work piece, the pressure exerted from the pair of shoulder surfaces to the work piece changes, so that there is a concern that a welding defect may be generated. On the contrary, Patent Document 5 discloses a technique which suppresses a variation in the sheet thickness of a work piece in a manner such that a shoulder surface is formed in a tapered shape and a spiral or concentric groove is formed in the shoulder surface.

Further, Patent Document 6 discloses a technique which suppresses warpage generated in a work piece by forming a vortex groove in a shoulder surface in a movable bobbin tool in which a gap between a pair of shoulder surfaces is adjustable in accordance with the thickness while a welding work is performed, that is, the tool moves.

[Patent Document 1] Japanese Unexamined Patent Application, First Publication No. 2002-263863

[Patent Document 2] Japanese Unexamined Patent Application, First Publication No. 2005-74518 8

[Patent Document 3] PCT Japanese Translation Patent Publication No. 2005-519769

[Patent Document 4] Japanese Unexamined Patent Application, First Publication No. 2003-326376

[Patent Document 5] Japanese Unexamined Patent Application, First Publication No. 2003-320465

[Patent Document 6] Japanese Unexamined Patent Application, First Publication No. 2005-7466

SUMMARY OF THE INVENTION

In the tool disclosed in Patent Document 5, when the thickness of the work piece becomes larger than the gap between the pair of shoulder surfaces due to a variation in the sheet thickness of the work piece, the surface of the work piece is scraped by the shoulder surface and the scraped portion is discharged to the outside of the tool. As a result, the thickness of the work piece decreases greatly, so that satisfactory welding may not be performed. Further, since the contact range of the tapered shoulder surface with respect to the work piece changes, there is concern that a heat input may change due to friction heat and a welding defect may be generated.

In the tool disclosed in Patent Document 6, the gap between the shoulder surfaces is adjustable in accordance with the thickness of the work piece white the welding work is performed, that is, while the tool is moving, a method may be considered in which the gap follows a variation in the sheet thickness of the work piece. However, when a variation in the sheet thickness is minute, it is difficult to perform the control and impossible to perform satisfactory welding.

The present invention is made in view of the above-described problems, and it is an object of the present invention to provide a bobbin tool type friction stir welding tool which easily performs satisfactory welding even when a variation in the sheet thickness occurs in a work piece and a friction stir welding apparatus which includes the friction stir welding tool.

In order to attain the above-described object, the present invention adopts the following configuration. That is, according to an aspect of the present invention, there is provided a friction stir welding tool including: a first shoulder surface which comes into contact with a front surface of a work piece; a second shoulder surface which is disposed so as to face the first shoulder surface and comes into contact with a rear surface of the work piece; and a shaft portion which connects the first shoulder surface and the second shoulder surface to each other with the gap therebetween fixed, wherein the friction stir welding tool rotates about the axis line of the shaft portion in a predetermined tool rotation direction so as to perform friction stir welding on the work piece, and wherein the friction stir welding tool further includes a groove which is formed in at least one of the first shoulder surface and the second shoulder surface and extends toward the front side of the tool rotation direction so as to be opened to the outer peripheral side edge as it moves toward the outer peripheral side in the first shoulder surface or the second shoulder surface.

According to the friction stir welding tool, when a variation in the sheet thickness occurs in the work piece so that the thickness of the work piece becomes larger than the gap between the first shoulder surface and the second shoulder surface, the extra thickness of the work piece is scraped by the groove which is formed in at least one of the first shoulder surface and the second shoulder surface. That is, since the groove which extends toward the front side in the tool rotation direction as it moves to the outside in the radial direction of the axis line is opened to the outer peripheral side edge of the friction stir welding tool, a part of the work piece is scraped so as to enter the groove with the rotation about the axis line. Then, since a part of the work piece which is scraped and softened in the groove in this way is stirred by the shaft portion so that it becomes a welding portion, the thickness of the work piece does is not greatly decreased.

Further, since the first shoulder surface and the second shoulder surface are disposed so as to be parallel to each other, the contact ranges of the first shoulder surface and the second shoulder surface with respect to the work piece do not extremely change. Thus, the heat input caused by friction heat does not greatly change.

Furthermore, since the gap between the first shoulder surface and the second shoulder surface is fixed by the shaft portion, it is not necessary to adjust the gap between the first shoulder surface and the second shoulder surface so that it changes in accordance with a variation in the sheet thickness.

Further, in the friction stir welding tool according to the aspect of the present invention, the gap between the first shoulder surface and the second shoulder surface in the axial direction may be set to be equal to or smaller than a dimension obtained by subtracting a thermal expansion amount of the shaft portion in the axial direction during the friction stir welding from a minimal allowable dimension of the thickness of the work piece.

Accordingly, even when a variation in the sheet thickness of the work piece reaches the minimal allowable dimension of the thickness of the work piece, the first shoulder surface and the second shoulder surface respectively come into contact with the work piece. Accordingly, it is possible to obtain a constant heat input caused by the friction heat between the first shoulder surface and the work piece and the second shoulder surface and the work piece. Thus, since it is possible to prevent an unevenness caused by a difference in heat input to the welding position of the work piece, it is possible to perform satisfactory welding.

Further, in the friction stir welding tool according to the aspect of the present invention, the groove may be formed in both the first shoulder surface and the second shoulder surface, and the gap between bottom portions of the groove portions in the first shoulder surface and the second shoulder surface in the axial direction may be set to be equal to or larger than a dimension obtained by subtracting a thermal expansion amount of the shaft portion in the axial direction during the friction stir welding from a maximal allowable dimension of the thickness of the work piece.

Accordingly, even when a variation in the sheet thickness of the work piece reaches the maximal allowable dimension of the thickness of the work piece, it is possible to reliably scrape the extra thickness of the work piece in the groove.

Further, in the friction stir welding tool according to the aspect of the present invention, the groove may be formed in one of the first shoulder surface and the second shoulder surface, and the gap between a bottom portion of the groove and the other of the first shoulder surface and the second shoulder surface in the axial direction may be set to be equal to or larger than a dimension obtained by subtracting a thermal expansion amount of the shaft portion in the axial direction during the friction stir welding from a maximal allowable dimension of the thickness of the work piece.

Accordingly, as described above, even when a variation in the sheet thickness of the work piece reaches the maximal allowable dimension of the thickness of the work piece, it is possible to reliably insert the extra thickness of the work piece in the groove.

According to another aspect of the present invention, there is provided a friction stir welding apparatus including: the above-described friction stir welding tool; a main body which is installed at the front surface side of the work piece; and a tool holding unit which holds the friction stir welding tool and is supported by the main body so as to be relatively displaceable in the axial direction with respect to the main body.

Accordingly, since the friction stir welding tool may follow the fluctuation caused by a variation in the sheet thickness of the work piece, it is possible to perform more satisfactory welding on the work piece.

Further, the friction stir welding apparatus according to the aspect of the present invention may further include a support member of which one end is fixed to the tool holding unit and the other end is biased toward the front surface of the work piece so as to come into contact with the front surface of the work piece.

Accordingly, it is possible to perform friction stir welding using the friction stir welding tool white absorbing a variation in the sheet thickness of the work piece using the support member and perform more satisfactory welding on the work piece.

According to the friction stir welding tool and the friction stir welding apparatus of the above-described aspects of the present invention, it is possible to handle a variation in the sheet thickness of the work piece within the range of the depth of the groove. Furthermore, since it is possible to suppress a variation in heat input due to friction heat and it is not necessary to adjust the gap between the shoulder surfaces, it is possible to easily perform satisfactory welding on the work piece.

BRIEF DESCRIPTION OF THE DRAWINGS

FIG. 1 is a longitudinal sectional view illustrating a friction stir welding apparatus according to an embodiment of the present invention.

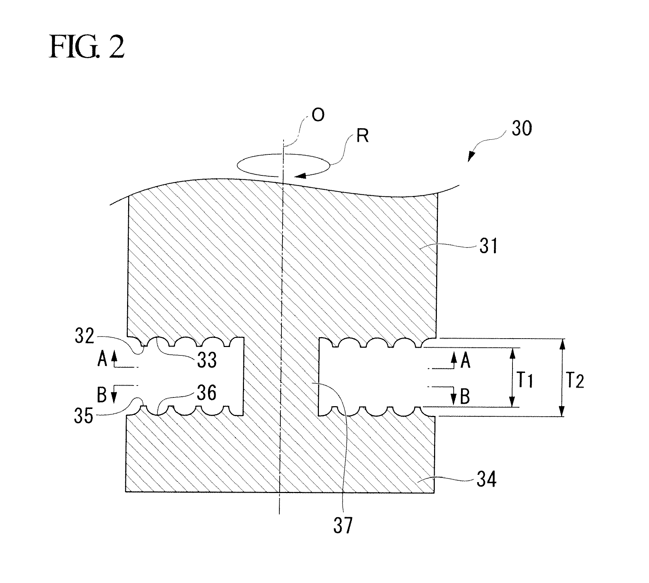

FIG. 2 is a partially enlarged view of FIG. 1 and is a diagram specifically illustrating a friction stir welding tool.
FIG. 3 is a cross-sectional view taken along the line A-A of FIG. 2.
FIG. 4 is a cross-sectional view taken along the line B-B of FIG. 2.
FIG. 5 is a partially enlarged view of FIG. 1 and is a diagram illustrating the movable range of a support member.
FIG. 6 is a longitudinal sectional view illustrating a friction stir welding tool according to a modified example.

DETAILED DESCRIPTION OF THE INVENTION

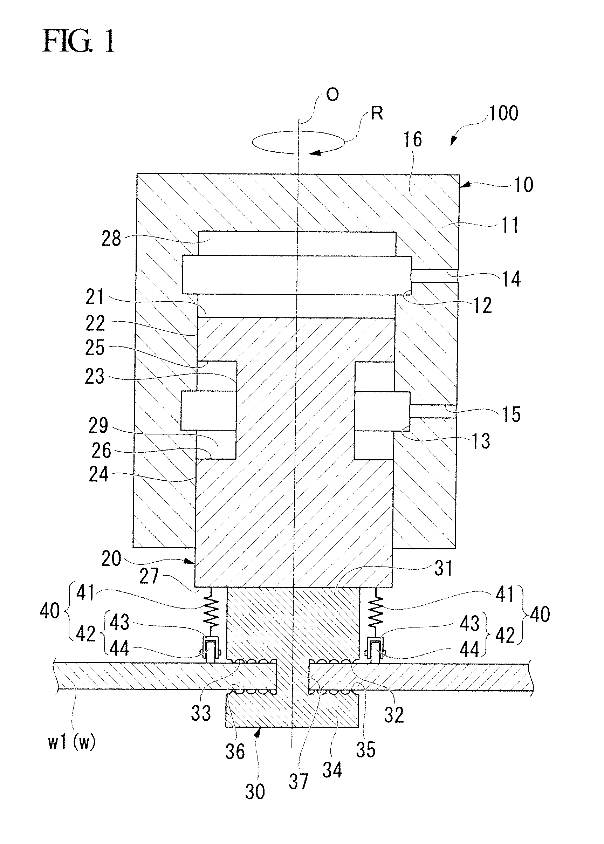

Hereinafter, a bobbin tool (a friction stir welding tool) and a friction stir welding apparatus according to an embodiment of the present invention will be described in detail by referring to the drawings.
As shown in FIG. 1, a friction stir welding apparatus 100 of the embodiment is an apparatus which welds a work piece W formed of two members, a first member W1 and a second member W2 by friction stir welding. In the description below, an example will be described in which the welding end surfaces, facing each other or coming into contact with each other, of the first member W1 and the second member W2 formed in a sheet shape are welded to each other by the friction stir welding apparatus 100.

The friction stir welding apparatus 100 includes a main body 10 which is attached to a main shaft of a processing machine (not shown), a tool holding unit 20 which is supported by the main body 10, a bobbin tool 30 which is integrally held by the tool holding unit 20, and a support member 40 which comes into contact with the surface of the work piece W.

The main body 10 is disposed with a gap between the main body and the work piece W at the front surface side of the work piece W, and is formed as a bottomed cylinder including a cylindrical portion 11 which is formed about the axis line O perpendicular to the extension direction of the work piece W (in the embodiment, the horizontal direction) and a cover portion 16 which covers one side in the direction along the axis line O of the cylindrical portion 11 (the side deviated from the front surface at the front surface side of the work piece W, which is hereinafter simply referred to as the upside). That is, the main body 10 is disposed so that the opening at the other side of the direction along the axis line O of the cylindrical portion 11 (the side near the front surface at the front surface side of the work piece W, which is hereinafter simply referred to as the downside) is positioned in the front surface of the work piece W. Such a main body 10 is configured to be arbitrarily movable in the direction along the axis line O and in the direction along the front surface of the work piece W with the movement of the main shaft of the processing machine which is integrally fixed.

The inner peripheral surface of the cylindrical portion 11 is provided with a first annular recess portion 12 and a second annular recess portion 13 which are recessed outward in the radial direction about the center of the axis line O. The first annular recess portion 12 and the second annular recess portion 13 are disposed so as to be deviated from each other in the direction along the axis line O, and the first annular recess portion 12 is positioned above the second annular recess portion 13. Further, the radial inner end of a first hole portion 14 which penetrates the inside and the outside of the cylindrical portion 11 is opened to the first annular recess portion 12 in the radial direction. Furthermore, the radial inner end of a second hole portion 15 which penetrates the inside and the outside of the cylindrical portion I I is opened to the second annular recess portion 13.

The tool holding unit 20 is formed in a multi-stage cylindrical shape about the axis line O, and is disposed so as to be relatively displaceable in the direction along the axis line O with respect to the main body 10 inside the main body 10 from the lower end opening of the cylindrical portion 11 in the main body 10.
The outer peripheral surface of the tool holding unit 20 is provided with a first outer peripheral surface 22, a second outer peripheral surface 23, and a third outer peripheral surface 24. The first outer peripheral surface 22 is connected to the first end surface 21 which is directed upward in the tool holding unit 20, and has the same outer diameter as that of the inner peripheral surface of the cylindrical portion 11. The second outer peripheral surface 23 is disposed below the first outer peripheral surface 22, and has an outer diameter which is smaller than that of the first outer peripheral surface 22 by one level. The third outer peripheral surface 24 is disposed bellow the second outer peripheral surface 23, and has the same outer diameter as that of the inner peripheral surface of the cylindrical portion 11 as in the first outer peripheral surface 22. Further, the third outer peripheral surface 24 is connected to a second end surface which is directed downward in the tool holding unit 20.

Further, the step portion between the first outer peripheral surface 22 and the second outer peripheral surface 23 is formed as a first step surface 25 which is directed downward while being formed in an annular shape. Further, the step portion between the second outer peripheral surface 23 and the third outer peripheral surface 24 is formed as a second step surface 26 which is directed upward while being formed in an annular shape.

Further, a first fluid chamber 28 is defined inside the main body 10 by the cover portion 16, the first end surface 21 of the tool holding unit 20, and the inner peripheral surface of the cylindrical portion 11. The first annular recess portion 12 is present in the first fluid chamber 28, so that the radial inner end of the first hole portion 14 is opened toward the inside of the first fluid chamber 28. Furthermore, a second fluid chamber 29 is defined inside the main body 10 by the second outer peripheral surface 23, the first step surface 25, the second step surface 26, and the inner peripheral surface of the cylindrical portion 11. The second annular recess portion 13 is present in the second fluid chamber 29, so that the radial inner end of the second hole portion 15 is opened toward the inside of the second fluid chamber 29.

Further, the radial outer ends of the first hole portion 14 and the second hole portion 15 are respectively connected to the fluid pressure source through a pressure control valve (not shown). Accordingly, the fluid pressure is supplied and discharged from the fluid pressure source with the opening and closing of the pressure control valve, so that the pressures inside the first fluid chamber 28 and the second fluid chamber 29 are adjusted. In the embodiment, the pressure control valve controls the pressures inside the first fluid chamber 28 and the second fluid chamber 29 so that the tool holding unit 20 is stopped inside the main body 10 even when the tool holding unit 20 and the main body 10 are relatively displaced in the direction along the axis line O. That is, the tool holding unit 20 is supported so as to be relatively displaceable in the direction along the axis line O with respect to the main body 10 by the balance of the fluid pressures inside the first fluid chamber 28 and the second fluid chamber 29.

Further, a hydraulic pressure or a pneumatic pressure may be used as the fluid pressure.

The tool holding unit 20 is connected to a rotary mechanism (not shown) so as to be rotatable about the axis line O. Likewise, when the tool holding unit 20 rotates and the tool holding unit 20 is relatively displaced in the direction along the axis line O with respect to the main body 10, the first outer peripheral surface 22 and the third outer peripheral surface 24 slide on the inner peripheral surface of the cylindrical portion 11.

The bobbin tool 30 includes a first shoulder portion 31, a second shoulder portion 34. and a shaft portion 37 which are integrated with each other about the axis line O. The bobbin tool 30 rotates about the axis line O with the rotation of the tool holding unit 20 about the axis line O. In the description below, the rotation direction of the bobbin tool 30 about the axis line O is referred to as the tool rotation direction R.

The first shoulder portion 31 is formed in a columnar shape about the axis line O, where one side end of the direction along the axis line O, that is, the upper end is integrally fixed to the tool holding unit 20, and the other side end surface of the direction atone the axis line O, that is, the lower end surface is disposed at the front surface side of the work piece W so as to serve as a first shoulder surface 32 which presses the front surface.

The second shoulder portion 34 is formed in a columnar shape about the axis line O, and includes a second shoulder surface 35 which is disposed at the rear surface side of the work piece W and presses the rear surface. That is, the second shoulder surface 35 is disposed below the first shoulder surface 32 with a gap between the second shoulder surface and the first shoulder surface 32 in the direction along the axis line O. Furthermore, the second shoulder surface 35 is parallel to the first shoulder surface 32.

The shaft portion 37 is formed in a pillar shape which extends along the axis line O and has an outer diameter smaller than those of the first shoulder portion 31 and the second shoulder portion 34, and connects the first shoulder surface 32 and the second shoulder surface 35 to each other in the direction along the axis line O.

Further, in the embodiment, the gap between the first shoulder surface 32 and the second shoulder surface 35 is fixed by the shaft portion 37. That is, the bobbin tool 30 is formed as a fixation type in which the relative position between the first shoulder surface 32 and the second shoulder surface 35 is immovably fixed during the welding.

Further, the first shoulder surface 32 and the second shoulder surface 35 are provided with a first vortex groove (a groove) 33 or a second vortex groove (a groove) 36.

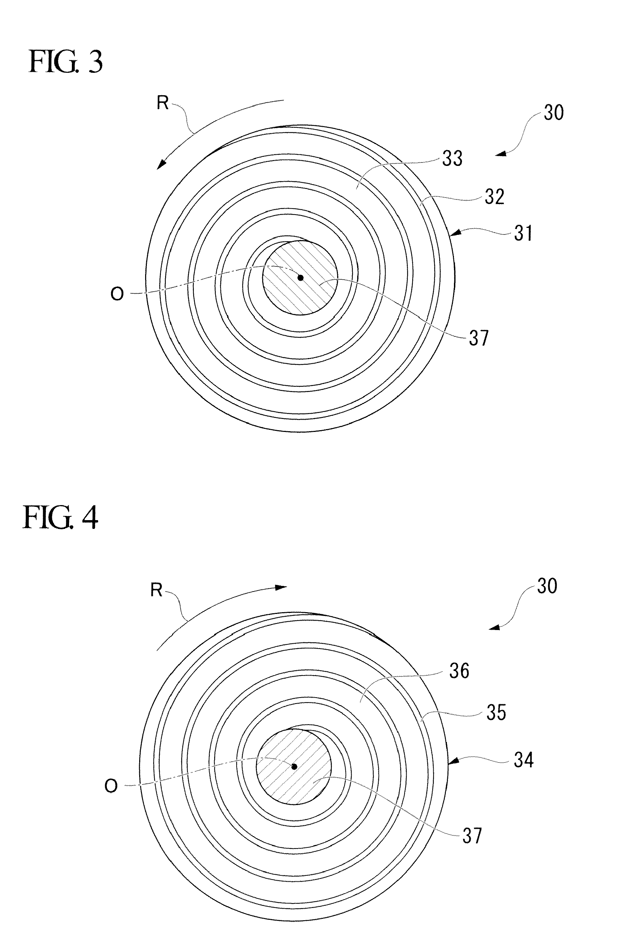

That is, the first shoulder surface 32 is provided with a first vortex groove 33 which is gradually twisted in a vortex shape toward the front side of the tool rotation direction R as it moves to the outer periphery, that is, the outside in the radial direction of the axis line O as shown in FIG. 3. The radial outer end of the first vortex groove 33 is opened to the outer peripheral surface of the first shoulder portion 31 at the outer peripheral side of the first vortex groove 33, that is, the outer peripheral side edge. The depth of the first vortex groove 33, that is, the dimension in the direction along the axis line O from the first shoulder surface 32 to the bottom portion of the first vortex groove 33 is set to be constant throughout the entire area in the extension direction of the first vortex groove 33.

Further, the second shoulder surface 35 is provided with a second vortex groove 36 which is gradually twisted in a vortex shape toward the front side of the tool rotation direction R as it moves to the outer periphery, that is, the outside in the radial direction of the axis line O as shown in FIG. 4. The radial outer end of the second vortex groove 36 is opened to the outer peripheral surface of the second shoulder portion 34 at the outer peripheral side of the second vortex groove 36, that is, the outer peripheral side edge. The depth of the second vortex groove 36, that is, the dimension in the direction along the axis line O from the second shoulder surface 35 to the bottom portion of the second vortex groove 36 is set to be constant throughout the entire area in the extension direction thereof.

In the embodiment, the gap between the first shoulder surface 32 and the second shoulder surface 35 in the direction along the axis line O and the gap between the bottom portion of the first vortex groove 33 and the bottom portion of the second vortex groove 36 in the direction alone the axis line O are respectively set to a predetermined dimension.

That is, the gap $T_1$ between the first shoulder surface 32 and the second shoulder surface 35 in the direction along the axis line O is set to a dimension obtained by subtracting the thermal expansion amount $\Delta L$ in the direction along the axis line O of the shaft portion 37 during friction stir welding from the minimal allowable dimension $W_{LMS}$ of the thickness of the work piece W in the vertical direction as shown in the following equation (1).

$$T_1 \leq W_{LMS} - \Delta L \ \ldots \ (1)$$

Further, it is more desirable that the gap $T_1$ be equal to the dimension obtained by subtracting the thermal expansion amount $\Delta L$ in the direction along the axis line O of the shaft portion 37 during friction stir welding from the minimal allowable dimension $W_{LMS}$ of the thickness of the vertical direction of the work piece W. Further, the minimal value of $T_1$ may be appropriately set in accordance with the thickness of the work piece W and may be set to, for example, about 10 mm.

Further, the gap $T_2$ between the bottom portions of the first vortex groove 33 and the second vortex groove 36 in the direction alone the axis line O is set to be equal to or larger than a dimension obtained by subtracting the thermal expansion amount $\Delta L$ in the direction along the axis line O of the shaft portion 37 during friction stir welding from the maximal allowable dimension $W_{MMS}$ of the thickness of the work piece W in the direction alone the axis line O as shown in the following equation (2).

$$T_2 \geq W_{MMS} - \Delta L \ \ldots \ (2)$$

Further, it is more desirable that the gap $T_2$ be equal to the dimension obtained by subtracting the thermal expansion amount $\Delta L$ in the direction along the axis line O of the shaft portion 37 during friction stir welding from the maximal allowable dimension $W_{MMS}$ of the thickness of the work piece W in the direction along the axis line O. Further, the maximal value of $T_2$ may be appropriately set in accordance with the thickness of the first shoulder portion 31 and the second shoulder portion 34 in the direction along the axis line O.

Further, the thermal expansion amount $\Delta L$ of the shaft portion 37 in the direction along the axis line O during friction stir welding indicates a value which is calculated on the basis of a thermal expansion coefficient of the material forming the shaft portion 37, the temperature of the welding portion during friction stir welding (for example, 450°C to 500°C), and the dimension of the shaft portion 37 in the direction along the axis line O at room temperature, that is, the gap between the first shoulder surface 32 and the second shoulder surface 35 in the direction along the axis line O at room temperature.

As shown in FIG. 1, a pair of the support members 40 is provided from the second end surface 27 of the tool holding unit 20 to the front surface of the first member W1 or the front surface of the second member W2 in the work piece W. The support member 40 includes a coil spring 41 (a biasing member) which extends downward while one end thereof is fixed to the second end surface 27 of the tool holding unit 20 and a roller 42 which is integrally formed in the lower end of the coil spring 41. Further, instead of the coil spring 41, for example, an elastic material such as rubber may be used.

The roller 42 includes a roller support portion 43 which is formed so as to have a reverse U-shaped cross-section including the axis line O white being fixed to the other end of the coil spring 41 and a roller main body 44 which comes into contact with the front surface of the work piece W white being disposed so as to be rotatable about the rotation shaft perpendicular to the axis line O inside the roller support portion 43.
A pair of the support members 40 is disposed at both sides so as to interpose the bobbin tool 30 in the horizontal direction perpendicular to the extension direction of the welded end surface (the scanning direction of the bobbin tool 30).

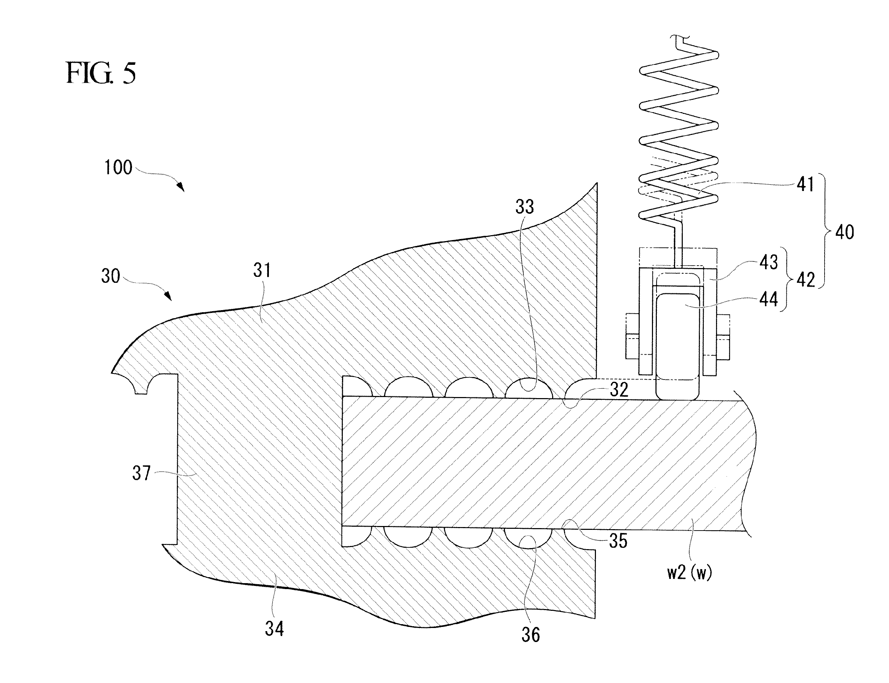

As shown in FIG. 5, the coil spring 41 of the support member 40 is configured to be expanded and contracted in the direction along the axis line O between the state where the position of the lower end of at least the roller 42 in the direction along the axis line O matches the first shoulder surface 32 and the state where the position matches the bottom portion of the first vortex groove 33.

Next, the operation of the embodiment will be described.
When the friction stir welding is performed, as shown in FIG. 1, the work piece W is disposed so as to be interposed between the first shoulder surface 32 of the first shoulder portion 31 and the second shoulder surface 35 of the second shoulder portion 34. Accordingly, the pressure is applied from the first shoulder surface 32 to the front surface of the work piece W, and the pressure is applied from the second Shoulder surface 35 to the rear surface of the work piece W. In addition, at this time, the roller 42 of the support member 40 is disposed on the front surface of the work piece W.

Then, when the bobbin tool 30 is rotated in the tool rotation direction R together with the tool holding unit 20 in this state, friction heat is generated between the first shoulder surface 32 and the front surface of the work piece W and between the second shoulder surface 35 and the rear surface of the work piece W so that the portion therebetween is softened, and the softened portion is stirred by the shaft portion 37 so as to perform friction stir welding. Such friction stir welding is sequentially performed by scanning the tool holding unit 20 and the bobbin tool 30 along the extension direction of the welding end surfaces of the first member W1 and the second member W2 with the movement of the main body 10. At this time, the roller 42 of the support member 40 rolls and moves on the front surface of the work piece W with the scanning of the bobbin tool 30 while advancing to the front surface of the work piece W.

The dimension of the work piece W in the direction along the axis line O, that is, the thicknesses of the first member W1 and the second member W2 as the work piece W, is set with a difference between the maximal allowable dimension and the minimal allowable dimension. Thus, a variation in the sheet thickness is generated with the scanning of the bobbin tool 30 at the position where friction stirring is performed by the bobbin tool 30.

In contrast, in the bobbin tool 30 of the embodiment, when a variation in the sheet thickness occurs in the work piece W so that the thickness of the work piece W becomes larger than the gap between the first shoulder surface 32 and the second shoulder surface 35, the extra thickness of the work piece W is scraped by the first vortex groove 33 and the second vortex groove 36 which are formed in the first shoulder surface 32 and the second shoulder surface 35.

That is, since the first vortex groove 33 and the second vortex groove 36 which extend to the front side of the tool rotation direction R as it moves to the outside in the radial direction of the axis line O are opened to the outer peripheral side of the bobbin tool 30, that is, the outer peripheral side edge, a part of the work piece W is scraped with the rotation about the axis line O so as to enter the first vortex groove 33 or the second vortex groove 36. Then, since a part of the work piece W inserted and softened inside the groove is stirred by the shaft portion 37 so as to be formed as a welded portion, the thickness of the work piece W is not extremely reduced.

Further, since the gap $T_1$ between the first shoulder surface 32 and the second shoulder surface 35 in the direction along the axis line O is set to be equal to or smaller than the dimension obtained by subtracting the thermal expansion amount $\Delta L$ of the shaft portion 37 in the direction along the axis line O during friction stir welding from the minimal allowable dimension $W_{LMS}$ of the thickness of the work piece W in the vertical direction, even when a variation in the sheet thickness of the work piece W reaches the minimal allowable dimension of the thickness of the work piece W, the first shoulder surface 32 and the second shoulder surface 35 come into contact with the work piece W. Accordingly, since the contact area between the first shoulder surface 32 and the work piece W and the contact area between the second shoulder surface 35 and the work piece W do not largely change, it is possible to obtain a constant heat input into the work piece W due to the friction heat, and prevent an unevenness caused by a difference in heat input to the welding position of the work piece W.

Furthermore, since the gap $T_2$ between the bottom portions of the first vortex groove 33 and the second vortex groove 36 in the direction along the axis line O is set to be equal to or larger than the dimension obtained by subtracting the thermal expansion amount $\Delta L$ of the shaft portion 37 in the direction along the axis line O during friction stir welding from the maximal allowable dimension $W_{MMS}$ of the thickness in the direction along the axis line O, even when a variation in the sheet thickness of the work piece W reaches the maximal allowable dimension of the thickness of the work piece W, it is possible to reliably insert the extra thickness of the work piece W inside the groove. Thus, since the front surface of the work piece W is not ground by the first shoulder surface 32 and the second shoulder surface 35, the thickness of the work piece W does not decrease greatly.

In the bobbin tool 30 of the embodiment, since a variation in the sheet thickness of the work piece W may be handled within the depth ranges of the first vortex groove 33 and the second vortex groove 36, it is possible to easily perform satisfactory welding even when a variation in the sheet thickness occurs in the work piece W with the scanning of the bobbin tool 30.

Further, in the friction stir welding apparatus 100 of the embodiment, the pressures inside the first fluid chamber 28 and the second fluid chamber 29 are controlled so that the tool holding unit 20 is stopped with respect to the main body 10 even when the tool holding unit 20 and the main body 10 are relatively displaced in the direction along the axis line O. That is, a floating mechanism in which the tool holding unit 20 is supported so as to be relatively displaceable in the direction along the axis line O with respect to the main body 10 is adopted.

Accordingly, when the pressure applied from the work piece W to the bobbin tool 30 changes due to a variation in the sheet thickness occurring in the work piece W, the tool holding unit 20 which holds the bobbin tool 30 is relatively displaced in the direction along the axis line O. Thus, since the bobbin tool 30 may fallow the fluctuation caused by a variation in the sheet thickness of the work piece W, it is possible to perform more satisfactory welding on the work piece W.

Further, when a fluctuation occurs in the work piece W due to a variation in the sheet thickness, the coil spring 41 of the support member 40 which comes into contact with the work piece W is expanded and contracted along a variation in the sheet thickness of the work piece W in the direction along the axis line O. Accordingly, since it is possible to perform friction stir welding using the friction stir welding tool while absorbing a variation in the sheet thickness of the work piece W using the support member 40, it is possible to suppress a variation in load with respect to the work piece W and perform more satisfactory welding on the work piece W.

Furthermore, at this time, it is desirable to set the spring constant of the coil spring 41 so that a value of a force obtained by subtracting the force applied to the front surface of the work piece W by the first shoulder surface 32 of the bobbin tool 30 from the compressing force applied to the tool holding unit 20 by the coil spring 41 with the compressing of the coil spring 41 in the support member 40 is in the range of 10 kgf to 50 kgf. Accordingly, it is possible to appropriately suppress a variation in load from the bobbin tool 30 with respect to the work piece W.

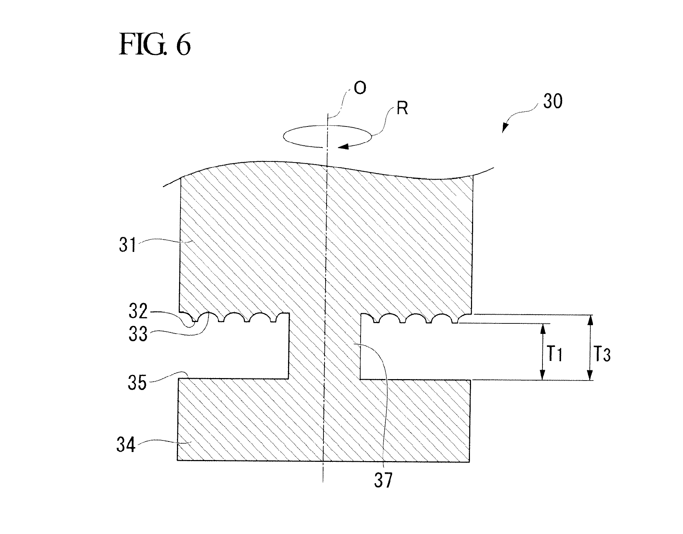

Next, a second embodiment of the present invention will be described by referring to FIG. 6. In the second embodiment, the same reference numerals will be given to the same components as those of the first embodiment, and a detailed description thereof will not be repeated here.

The bobbin tool 30 of the second embodiment is different from that of the first embodiment in that the first vortex groove 33 is formed only in the first shoulder surface 32 and the second vortex groove 36 is not formed in the second shoulder surface 35. The second shoulder surface 35 of the bobbin tool 30 is formed in a planar shape perpendicular to the axis line O.

In the embodiment, the gap $T_1$ between the first shoulder surface 32 and the second shoulder surface 35 in the direction along the axis line O is set to be equal to or smaller than a dimension obtained by subtracting the thermal expansion amount $\Delta L$ in the direction along the axis line O of the shaft portion 37 during friction stir welding from the minimal allowable dimension $W_{LMS}$ of the thickness of the work piece W in the vertical direction as shown in the above-described equation (1) as in the first embodiment.

Further, the gap $T_3$ between the bottom portion of the first vortex groove 33 and the second shoulder surface 35 in the direction along the axis line O is set to be equal to or larger than a dimension obtained by subtracting the thermal expansion amount $\Delta L$ of the shaft portion 37 in the direction alone the axis line O during friction stir welding from the maximal allowable dimension $W_{MMS}$ of the thickness of the work piece W in the direction along the axis line O as shown in the following equation (3).

$$T_3 \geq W_{MMS} - \Delta L \ \ldots \ (3)$$

Furthermore, it is more desirable that the gap $T_3$ be equal to the dimension obtained by subtracting the thermal expansion amount $\Delta L$ of the shaft portion 37 in the direction along the axis line O during friction stir welding from the maximal allowable dimension $W_{MMS}$ of the thickness of the work piece W in the direction atone the axis line O. Further, the maximal value of $T_3$ may be appropriately set in accordance with the thickness of the first shoulder portion 31.

As in the first embodiment, since the first shoulder surface 32 and the second shoulder surface 35 respectively come into contact with the work piece W even when a variation in the sheet thickness of the work piece W reaches the minimal allowable dimension of the thickness of the work piece W, it is possible to prevent an unevenness caused by a difference in heat input to the welding position of the work piece W.

Further, even when a variation in the sheet thickness of the work piece W reaches the maximal allowable dimension of the thickness of the work piece W, the extra thickness of the work piece W may be reliably inserted in the groove.

Thus, since it is possible to handle a variation in the sheet thickness of the work piece W within the range of the depth of the groove, it is possible to perform satisfactory welding even when a variation in the sheet thickness occurs in the work piece W.

White the embodiments of the present invention have been described in detail, the present invention is not limited thereto, and the design and the like may be slightly changed without departing from the technical spirit thereof.

For example, in the second embodiment, the first vortex groove 33 is formed only in the first shoulder surface 32 and the second shoulder surface 35 is formed in a planar shape. However, the first shoulder surface 32 may be formed in a planar shape and the second vortex groove 36 may be formed in the second shoulder surface 35. Even in this case, it is possible to easily perform satisfactory welding even when a variation in the sheet thickness occurs in the work piece W in the same way as above.

Further, in the embodiment, an example has been described in which the first vortex groove 33 and the second vortex groove 36 with a vortex shape are formed as the grooves formed in the first shoulder surface 32 and the second shoulder surface 35, but the groove may not be formed in the vortex shape. That is, the groove formed in at least one of the first shoulder surface 32 and the second shoulder surface 35 may extend to the front side of the tool rotation direction R so as to be opened to the outer peripheral side, that is, the outer peripheral side edge as it moves to at least the outer peripheral side.

For example, the groove may be formed in a circular-arc shape or a linear shape. Even in this case, since it is possible to scrape the work piece W in the groove from the outer peripheral side, it is possible to flexibly handle a variation in the sheet thickness of the work piece W.

Further, in the embodiment, an example has been described in which the welding end surfaces of the first member W1 and the second member W2 are welded along the extension direction of the welding end surface, but the friction stir welding apparatus 100 may be used in, for example, local welding such as spot welding. Further, the gap between the first shoulder surface 32 and the second shoulder surface 35 may be arbitrarily adjusted in accordance with the thickness of the work piece W before the welding.

Furthermore, in the embodiment, an example has been described in which the first shoulder surface 32 and the second shoulder surface 35 are parallel to each other, but the first shoulder surface 32 and the second shoulder surface 35 may not be parallel to each other. That is, the first shoulder surface 32 and the second shoulder surface 35 may be disposed so as to be inclined with respect to each other.

**Claims**

1. A friction stir welding tool comprising:

   a first shoulder surface (32) which comes into contact with a front surface of a subject work piece (W);
   a second shoulder surface (35) which is disposed so as to face the first shoulder surface (32) and comes into contact with a rear surface of the work piece (W); and
   a shaft portion (37) which connects the first shoulder surface (32) and the second shoulder surface (35) to each other with a gap therebetween fixed,
   wherein the friction stir welding tool rotates about the axis line (O) of the shaft portion (37) in a predetermined tool rotation direction (R) so as to perform friction stir welding on the work piece (W), and

   **characterized in that** the friction stir welding tool further comprises a groove (33, 36) which is formed in at least one of the first shoulder surface (32) and the second shoulder surface (35) and extends toward the front side of the tool rotation direction so as to be opened to the outer peripheral side edge as it moves toward the outer peripheral side in the first shoulder surface (32) or the second shoulder surface (35).

2. The friction stir welding tool according to Claim 1, wherein the gap ($T_1$) between the first shoulder surface (32) and the second shoulder surface (35) in the axial direction is set to be equal to or smaller than a dimension obtained by subtracting a thermal expansion amount of the shaft portion (37) in the axial direction (O) during the friction stir welding from a minimal allowable dimension of the thickness of the work piece (W).

3. The friction stir welding tool according to Claim 1 or 2, wherein the groove (33, 36) is formed in both the first shoulder surface (32) and the second shoulder surface (35), and
   wherein the gap ($T_2$) between bottom portions of the groove portions in the first shoulder surface (32) and the second shoulder surface (35) in the axial direction is set to be equal to or larger than a dimension obtained by subtracting a thermal expansion amount of the shaft portion (37) in the axial direction (O) during the friction stir welding from a maximal allowable dimension of the thickness of the work piece (W).

4. The friction stir welding tool according to Claim I or 2, wherein the groove (33, 36) is formed in one of the first shoulder surface (32) and the second shoulder surface (35), and
   wherein the gap ($T_3$) between a bottom portion of the groove and the other of the first shoulder surface (32) and the second shoulder surface (35) in the axial direction (O) is set to be equal to or larger than a dimension obtained by subtracting a thermal expansion amount of the shaft portion (37) in the axial direction (O) during the friction stir welding from a maximal allowable dimension of the thickness of the work piece (W).

5. A friction stir welding apparatus (100) comprising:

   the friction stir welding tool according to any one of Claims 1 to 4;
   a main body (10) which is installed at the front surface side of the work piece (W); and
   a tool holding unit (20) which holds the friction stir welding tool and is supported by the main body (10) so as to be relatively displaceable in the axial direction (O) with respect to the main body (10).

6. The friction stir welding apparatus according to Claim 5, further comprising:

   a support member (40) of which one end is fixed to the tool holding unit (20) and the other end is biased toward the front surface of the work piece (W) so as to come into contact with the front surface of the work piece (W).

EP 2 527 074 A1

# FIG. 1

FIG. 2

FIG. 3

FIG. 4

FIG. 5

EP 2 527 074 A1

FIG. 6

# EP 2 527 074 A1

Europäisches
Patentamt

European
Patent Office

Office européen
des brevets

## EUROPEAN SEARCH REPORT

Application Number

EP 12 15 1502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/043152 A1 (I. STOL ET AL) 2 March 2006 (2006-03-02) | 1-4 | INV. B23K20/12 |
| Y | * paragraphs [0019], [0034] - [0039]; figures 1,7 * | 5,6 | |
| Y | JP 2000 135575 A (KAWASAKI HEAVY IND LTD) 16 May 2000 (2000-05-16) * abstract; figures 1,2 * | 5,6 | |
| Y | JP 2010 214401 A (KAWASAKI HEAVY IND LTD) 30 September 2010 (2010-09-30) * abstract * | 6 | |
| X | US 2006/065694 A1 (I. STOL ET AL) 30 March 2006 (2006-03-30) | 1-4 | |
| Y | * paragraphs [0004], [0006] - [0007]; figures 1,3 * | 5 | |
| Y | EP 2 085 168 A2 (IWE INNOVATIVER WERKSTOFFEINSATZ GMBH & CO. KG) 5 August 2009 (2009-08-05) * paragraphs [0009] - [0012]; figure * | 5 | TECHNICAL FIELDS SEARCHED (IPC) B23K |
| X,D | JP 2003 320465 A (CONCURRENT TECHNOLOGIES CORP) 11 November 2003 (2003-11-11) | 1-4 | |
| A | * abstract; figures 1,4 * | 5 | |
| X,D | JP 2005 074518 A (BOEING CO) 24 March 2005 (2005-03-24) | 1-4 | |
| A | * abstract; figures 2a,4,5 * | 5 | |
| A | WO 99/52669 A1 (THE WELDING INSTITUTE ; W. M. THOMAS ET AL) 21 October 1999 (1999-10-21) * page 6, lines 13-23; figure 3a * | 1-4 | |

The present search report has been drawn up for all claims

| Place of search | Date of completion of the search | Examiner |
|---|---|---|
| Munich | 9 March 2012 | Jeggy, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

15

# EP 2 527 074 A1

### ANNEX TO THE EUROPEAN SEARCH REPORT
### ON EUROPEAN PATENT APPLICATION NO.

EP 12 15 1502

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2012

| Patent document cited in search report | | Publication date | Patent family member(s) | | Publication date |
|---|---|---|---|---|---|
| US 2006043152 | A1 | 02-03-2006 | NONE | | |
| JP 2000135575 | A | 16-05-2000 | JP | 4215179 B2 | 28-01-2009 |
| | | | JP | 2000135575 A | 16-05-2000 |
| JP 2010214401 | A | 30-09-2010 | CN | 102355977 A | 15-02-2012 |
| | | | JP | 2010214401 A | 30-09-2010 |
| | | | KR | 20110132358 A | 07-12-2011 |
| | | | US | 2012006883 A1 | 12-01-2012 |
| | | | WO | 2010106892 A1 | 23-09-2010 |
| US 2006065694 | A1 | 30-03-2006 | AT | 447458 T | 15-11-2009 |
| | | | BR | PI0516213 A | 26-08-2008 |
| | | | CA | 2580966 A1 | 06-04-2006 |
| | | | DK | 1793961 T3 | 15-03-2010 |
| | | | EP | 1793961 A2 | 13-06-2007 |
| | | | ES | 2336235 T3 | 09-04-2010 |
| | | | US | 2006065694 A1 | 30-03-2006 |
| | | | WO | 2006037051 A2 | 06-04-2006 |
| EP 2085168 | A2 | 05-08-2009 | DE | 202008001344 U1 | 10-04-2008 |
| | | | EP | 2085168 A2 | 05-08-2009 |
| JP 2003320465 | A | 11-11-2003 | EP | 1361014 A2 | 12-11-2003 |
| | | | JP | 4210148 B2 | 14-01-2009 |
| | | | JP | 2003320465 A | 11-11-2003 |
| | | | JP | 2008221338 A | 25-09-2008 |
| | | | US | 2003209588 A1 | 13-11-2003 |
| JP 2005074518 | A | 24-03-2005 | CN | 1590003 A | 09-03-2005 |
| | | | EP | 1510279 A1 | 02-03-2005 |
| | | | JP | 2005074518 A | 24-03-2005 |
| | | | KR | 20050022852 A | 08-03-2005 |
| | | | US | 2004035914 A1 | 26-02-2004 |
| WO 9952669 | A1 | 21-10-1999 | AU | 3435199 A | 01-11-1999 |
| | | | WO | 9952669 A1 | 21-10-1999 |

EPO FORM P0459

For more details about this annex : see Official Journal of the European Patent Office, No. 12/82

16

**EP 2 527 074 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002263863 A
- JP 2005745188 A
- JP 2005519769 A

- JP 2003326376 A
- JP 2003320465 A
- JP 2005007466 A